## Europäisches Patentamt

## European Patent Office

## Office européen des brevets

(11) Veröffentlichungsnummer: **0 019 754**
A1

(12) **EUROPÄISCHE PATENTANMELDUNG**

(21) Anmeldenummer: **80102461.3**

(22) Anmeldetag: **06.05.80**

(51) Int. Cl.³: **C 08 J 5/06, B 32 B 27/12**

(30) Priorität: **01.06.79 DE 2922352**

(43) Veröffentlichungstag der Anmeldung: **10.12.80**
**Patentblatt 80/25**

(84) Benannte Vertragsstaaten: **AT BE CH DE FR GB IT LI LU NL SE**

(71) Anmelder: **DYNAMIT NOBEL AKTIENGESELLSCHAFT, Patentabteilung Postfach 1209, D-5210 Troisdorf, Bez. Köln (DE)**

(72) Erfinder: **Jäschke, Hans, Siegstrasse 99, D-5205 St. Augustin/Menden (DE)**
Erfinder: **Spielau, Paul, Dr., Van Gogh-Platz 10, D-5210 Troisdorf-Sieglar (DE)**
Erfinder: **Ulb, Horst, Friedlandstrasse 20, D-5210 Troisdorf-Sieglar (DE)**

(54) Verfahren zum Verbinden eines Flächengebildes aus thermoplastischem Kunststoff mit einem Polyesterfaservlies.

(57) Verfahren zum haftfesten Verbinden eines Flächengebildes (2) aus thermoplastischem Kunststoff mit einem verformbaren Polyesterfaservlies (3) durch Anwendung von Druck und Wärme, bei dem zusätzlich eine Besinterung des Polyesterfaservlieses (3) mit dem thermoplastischen Kunststoff des Flächengebildes (2) vorgenommen wird.

EP 0 019 754 A1

- 1 -

DYNAMIT NOBEL AKTIENGESELLSCHAFT
Troisdorf Bez. Köln

<u>Verfahren zum Verbinden eines Flächengebildes aus
thermoplastischem Kunststoff mit einem Polyesterfaser-
vlies</u>

Die Erfindung bezieht sich auf ein Verfahren zum haftfesten Verbinden eines Flächengebildes, wie Platten,
Folien aus einem thermoplastischen Kunststoff mit einem
verformbaren Polyesterfaservlies, bei dem das Polyesterfaservlies auf mindestens einer Seite des sich im plastischen bzw. annähernd plastischen Zustand befindlichen
Flächengebildes unter Anwendung von Druck aufgebracht
und durch anschließendes Abkühlen verankert wird.

Im Kunststoffapparate- und Rohrleitungsbau werden in
zunehmendem Maße Verbundkonstruktionen aus mehreren
Werkstoffen angewendet, um einerseits den Anforderungen
an mechanische Steifigkeit und Festigkeit und andererseits z.B. von Chemikalienbeständigkeit zu genügen. Im
chemischen Apparatebau werden Behälter vielfach innen
mit einem Liner aus thermoplastischem Kunststoff ausgekleidet, der an den Stoßstellen geschweißt werden kann, während die Außenseite mit glasfaserarmierten Kunststofflaminaten verstärkt wird. Besteht der Liner nun aus Polyäthylen oder Polypropylen oder in neuerer Zeit aus Polyvinylidenfluorid, so ist zum Verbinden des glasfaserverstärkten Kunststofflaminates mit dem Liner eine haftvermittelnde Zwischenschicht erforderlich. Als Zwischenschicht sind hierbei Fasersubstrate bekannt, gewebt oder nicht gewebt, aus natürlichen, künstlichen oder synthetischen Fasern, wie Glasfasern oder Kunststoffasern, die bereits bei der Herstellung der plattenförmigen thermoplastischen Liner auf einer Oberfläche eingepreßt werden. Vorwiegend aus Glasfasern bestehende Gewebe oder Vliese haben eine gute Haftung zum glasfaserverstärktem Kunststoff, bringen jedoch andererseits den Nachteil mit sich, daß sie eine Umformung des Verbundes wegen der Sprödigkeit der Glasfasern nicht zulassen.

Anstelle von Glasfasergeweben sind bereits Fasersubstrate aus Kunststoffasern als Zwischenschicht eingesetzt worden, die jedoch den Nachteil aufweisen, daß die erzielbare Schälfestigkeit des Verbundes im Vergleich zu Glasfasergeweben erheblich geringer ist und den gestellten hohen Anforderungen im Apparatebau nicht immer genügt.

Andererseits ist man bestrebt, Polyesterfaservliese als Zwischenschicht einzusetzen, da sie verformbar sind und ermöglichen, das flächige Verbundmaterial warm zu verformen, z.B. zu sogenannten Klöpperböden. Die Nachteile von Glasfasern werden vermieden und sie sind ebenfalls unverrottbar.

Es sind deshalb bereits zahlreiche Versuche bekanntgeworden, die Haftfestigkeit zwischen dem thermoplastischen Kunststoff-Liner und haftvermittelndem Fasersubstrat zu erhöhen, wozu wir beispielsweise auf die DE-OS 27 13 754 und 26 55 597 verweisen, die das Problem in Bezug auf Polyvinylidenfluorid beschreiben. In den genannten Offenlegungsschriften werden zur Erhöhung der Haftfestigkeit zwischen Fasersubstrat aus Kunststoff und dem thermoplastischen Liner einerseits lösungsmittelhaltige Klebemittel auf der Basis des Kunststoffes des Liners und zum anderen Lösungen eines nicht fluorierten Polymeren oder Copolymeren in einem aprotischen polaren Lösungsmittel jeweils unter zusätzlicher Anwendung von Wärme zum Herstellen des Verbundes eingesetzt.

Darüber hinaus ist das Besintern von Materialien, wie Fasersubstraten mittels thermoplastischer Kunststoffe beispielsweise zu dem Zweck bekannt, diese auf diese Weise tiefziehfähig zu machen und ihnen eine bleibende Form zu geben, siehe beispielsweise DE-OS 21 65 917 und DE-OS 20 37 309. Hieraus ist jedoch das Herstellen hochwertiger Verbundwerkstoffe als Konstruktionsmaterial insbesondere im Apparatebau nicht vorbekannt.

Der Erfindung liegt die Aufgabe zugrunde, ein Verfahren zum haftfesten Verbinden eines Flächengebildes aus einem thermoplastischem Kunststoff mit einem Polyesterfaservlies zu schaffen, bei dem gegenüber den bekannten Verfahren höhere Haftfestigkeiten zwischen Kunststoff und Polyesterfaservlies erzielt werden. Solche Verbunde aus einem thermoplastischen Kunststoff mit einem Polyesterfaservlies werden benötigt, um mit weiteren Schichtstoffen, wie z.B. glasfaserarmierten ungesättigten Polyesterharzen zu Konstruktionsteilen für den Apparatebau verbunden zu werden.

Die Erfindung löst die gestellte Aufgabe durch ein Verfahren, bei dem auf eine Seite des Polyesterfaservlieses eine Kunststoffpulverschicht von 20 bis 100 $g/m^2$ aus dem gleichen Kunststoff, aus dem das Flächengebilde besteht, gleichmäßig aufgetragen und bei einer Temperatur zwischen 100 bis 250 °C gesintert und abgekühlt wird, dann die besinterte Seite des Polyesterfaservlieses mit dem Flächengebilde durch Einwalzen verbunden wird.

Überraschend ist nun, daß die bei dem Verbund des Kunststoffflächengebildes mit dem Polyesterfaservlies die erzielbaren Haftfestigkeiten um 20 bis 100 % und mehr gesteigert werden können, wobei dies nicht nur für Raumtemperatur gilt, sondern sich insbesondere auch bei höheren Temperaturen mit Vorteil bemerkbar macht. Die Erfindung läßt sich mit besonderem Vorteil für die im konstruktiven Apparatebau eingesetzten thermoplastischen Kunststoffe Polyvinylidenfluorid, Polypropylen und Polypropylen-Copolymere sowie Polyäthylen (Hochdruckpolyäthylen, Niederdruckpolyäthylen) anwenden, wobei reine Kunststoffflächengebilde als auch solche aus Formmassen auf Basis der genannten Kunststoffe unter Zusatz von Hilfsstoffen, Füllstoffen, Pigmenten usw. in Frage kommen. Das erfindungsgemäße Verfahren läßt sich insbesondere dann mit Vorteil einsetzen, wenn das Verbinden des Flächengebildes aus Kunststoff mit dem Polyesterfaservlies kontinuierlich mittels Walzen erfolgt, wobei eine relativ kurze Verweilzeit zur Anwendung des Verbindungsdruckes im Walzenspalt vorhanden ist. Ein solcher Kaschiervorgang kann beispielsweise direkt einem Extruder zum Extrudieren des Flächengebildes aus thermoplastischem Kunststoff nachgeordnet werden, so daß die besinterte Seite des Polyester-

0019754

faservlieses in das noch extrusionswarme Flächengebilde eingebettet wird.

Eine bevorzugte Variante des erfindungsgemäßen Verfahrens zeichnet sich dadurch aus, daß für den Verbund mit einem Flächengebilde aus Polyvinylidenfluorid eine Pulverschicht aus Polyvinylidenfluorid von vorzugsweise 40 bis 70 g/m$^2$ bei einer Temperatur von 175 bis 200 °C auf das Polyesterfaservlies gesintert wird. Das auf diese Weise herstellbare faserverstärkte Flächengebilde aus Polyvinylidenfluorid ist auch als Verbund noch verformbar, da das dehnungsfähige Polyesterfaservlies ebenfalls in einem beschränkten Umfange Verformungen, wie beispielsweise Tiefziehen zuläßt. Darüber hinaus werden die relativ großen Wärmeausdehnungen des Polyvinylidenfluorids, die in der Größenordnung von 15 bis 10 x 10$^{-5}$ je °C Wärmedehnungskoeffizient liegen ebenfalls durch das dehnungsfähige Polyesterfaservlies aufgefangen und wirken sich bei einem Verbund mit einem weiteren Werkstoff wie z.B. glasfaserverstärkte Polyesterformkörper usw. im Vergleich zu Glasfasergeweben vorteilhaft aus. Die auf die mit dem PVF$_2$ zu kaschierende Seite des Polyesterfaservlieses aufgebrachte Sinterschicht aus Polyvinylidenfluoridpulver bewirkt eine wesentliche Verbesserung der Haftfestigkeit des Verbundes insbesondere bei kontinuierlichen Herstellungsverfahren mittels Walzen od.dgl. Hierbei wird das besinterte Polyesterfaservlies, das sich in der Regel auf Raumtemperatur befinden wird, in das sich im plastischen bzw. annähernd plastischen Zustand befindende Flächengebilde eingewalzt, eingebettet, aufkaschiert.

Für die Herstellung eines Verbundes mit einem Flächengebilde aus Polypropylen, wobei auch Copolymere desselben eingeschlossen sein sollen, wird eine Pulverschicht aus Polypropylen von vorzugsweise 20 bis 50 g/m$^2$

bei einer Temperatur von etwa 130 bis 150 $^\circ$C auf das Polyesterfaservlies gesintert. Auch ermöglicht das erfindungsgemäße Verfahren die Erzielung höherer Haftfestigkeiten zwischen dem Kunststoffflächengebilde aus Polypropylen und dem Polyesterfaservlies.

Die Erfindung kann auch für den Verbund mit einem Flächengebilde aus Polyäthylen angewendet werden, wobei eine Pulverschicht aus Polyäthylen von 20 bis 50 g/m$^2$ bei einer Temperatur von etwa 100 bis 130 $^\circ$C auf das Polyesterfaservlies gesintert wird, woran sich das kontinuierliche Herstellen des Verbundes anschließt.

Als Polyestervliese kommen insbesondere thermoplastische Polyestervliese mit einem Flächengewicht von 100 bis 300 g/m$^2$ zum Einsatz, insbesondere aus linearen Polyestern auf Basis Polyterephthalat. Die Vliese werden beispielsweise durch Vernadelung von Polyesterstapelfasern hergestellt, so daß sie eine hohe Festigkeit bei gleichzeitig guter Dehnung aufweisen. Solche Vliese weisen eine weitgehend strukturfreie Vliesoberfläche auf, so daß sich des weiteren auch aufgrund der thermoplastischen Eigenschaften der Vorteil ergibt, daß bei dem Herstellen des Verbundes mit dem thermoplastischen Flächengebilde sich die Vliesstruktur kaum auf die abgewandte Oberfläche des Flächengebildes durchdrückt. Es ist also möglich, auch relativ dünnwandige Flächengebilde, insbesondere Folien oder Bahnen bzw. Platten aus Polyvinylidenfluorid, Polypropylen oder Polyäthylen mit dem Polyesterfaservlies zu verbinden, ohne das sich die Struktur auf der den Vlies gegenüberliegenden Seite des Flächengebildes bemerkbar macht. Hierdurch ist es möglich, auch für den Apparatebau Kunststoffflächengebilde relativ

geringer Dicke, von 0,8 mm an aufwärts, einzusetzen, wodurch insbesondere bei teuren Werkstoffen, wie Polyvinylidenfluorid, Kosten durch Materialersparnis gespart werden und die nötige mechanische Steifigkeit beispielsweise durch den zusätzlichen Verbund mit glasfaserverstärkten Formkörpern erbracht wird.

Für die Besinterung wird vorzugsweise ein Kunststoffpulver mit einer Korngröße von 150 bis 400 $\mu m$ eingesetzt. Das Kunststoffpulver wird bevorzugt aus reinem Kunststoff bestehen, d.h. ohne Füllstoffe sein, jedoch ist beispielsweise eine geringfügige Pigmentierung möglich, ohne daß die gewünschten zu erzielenden Haftfestigkeitsverbesserungen nachteilig beeinflußt werden.

Die Herstellung von einseitig oder beidseitig mit einem Polyesterfaservlies kaschierten thermoplastischen Flächengebilden auf Basis von Polyvinylidenfluorid, Polypropylen oder Polyäthylen erfolgt mit dem Ziel, diese Flächengebilde aus Kunststoff mit weiteren Materialien zum Zwecke der Armierung zu verbinden, wobei insbesondere an glasfaserarmierte ungesättigte Polyesterhazrformkörper oder beispielsweise an armierte Epoxydharzformkörper gedacht ist. Da der direkte Verbund zwischen den eingangs genannten Flächengebilden aus Polyvinylidenfluorid, Polypropylen oder Polyäthylen mit glasfaserarmierten ungesättigten Polyesterharzen nicht möglich ist, fungiert das Polyesterfaservlies als Zwischenschicht, wobei die mit dem Polyesterfaservlies erzielbaren Haftfestigkeiten einerseits zum Flächengebilde, andererseits zum armierenden Formkörper insgesamt die mechanischen Eigenschaften des Gesamtverbundes mitbestimmen. Eine vorteilhafte Anwendung des erfindungsgemäßen Verfahrens sieht daher seine Weiterbildung in der Weise vor, daß auf die freie Oberfläche des mit dem Flächengebilde verbundenen Polyesterfaservlies ein Haftvermittler aus einem aushärt-

baren ungesättigten Polyesterharz aufgebracht und mit einem vorgefertigten und ausgehärteten glasfaserarmierten ungesättigten Polyesterformkörper unter Anwendung von Druck bei Raumtemperatur durch Aushärten des Haftvermittlers haftfest verbunden wird. Hierbei kann auch das Flächengebilde vorher zu einem entsprechenden Formkörper verformt worden sein. Die mit dem erfindungsgemäßen Verfahren herstellbaren Verbundkörper, insbesondere auch Verbundplatten, können im Behälterbau als Halbzeug eingesetzt werden und in einfacher Weise an den Nahtstellen verschweißt werden. Die Verbundkörper zeigen keine Verwölbungserscheinungen, wobei einerseits die eingesetzten dehnbaren Polyesterfaservliese beitragen und zum anderen die bereits vorgefertigten und ausgehärteten Formkörper aus glasfaserarmierten ungesättigten Polyesterharzen, die im kalten Zustand mit dem Vorverbund verbunden werden.

Zum Herstellen eines armierten Verbundformkörpers eignen sich praktisch alle bekannten glasfaserarmierten ungesättigten Polyesterharze, hierzu wird beispielsweise auf die entsprechenden Ausführungen zu ungesättigten Polyesterharzen in dem Kunststoff-Taschenbuch 20. Aussage von H.J.Sechtling, Carl Hanser Verlag München, Wien 1977, Seiten 384 bis 388 verwiesen. Der Glasfaseranteil wird in der Regel zwischen 20 bis 50 Gew.-%, bezogen auf das glasfaserverstärkte ungesättigte Polyesterharz betragen.

Die Erfindung wird in der Zeichnung und an Ausführungsbeispielen näher erläutert. Es zeigen

Fig. 1     schematisch das Kaschieren eines Flächengebildes mit besintertem Polyesterfaservlies und

Fig. 2     schematisch den Aufbau eines armierten Verbundformkörpers.

Das Verfahren zum haftfesten Verbinden eines Flächengebildes aus beispielsweise Polyvinylidenfluori'd geht bei kontinuierlicher Verfahrensweise von einem Extruder 1 aus, mit dem das Flächengebilde 2 extrudiert wird. Das in einem nicht dargestellten Arbeitsgang einseitig mit Polyvinylidenfluorid besinterte Polyesterfaservlies 3 wird beispielsweise von der Vorratsrolle 4 über ein Andrückwalzenpaar 5 dem Flächengebilde 2 zugeführt. Die besinterte Seite 7 des Polyesterfaservlieses 3 wird hierbei in die noch plastische Oberfläche des Flächengebildes 2 eingedrückt, beim Durchlaufen des Walzenspaltes, der von den Andrückwalzen 5 gebildet wird. Nach Erkalten des Verbundflächengebildes 6 ist die gewünschte haftfeste Verbindung zwischen Polyesterfaservlies und Flächengebilde erreicht.

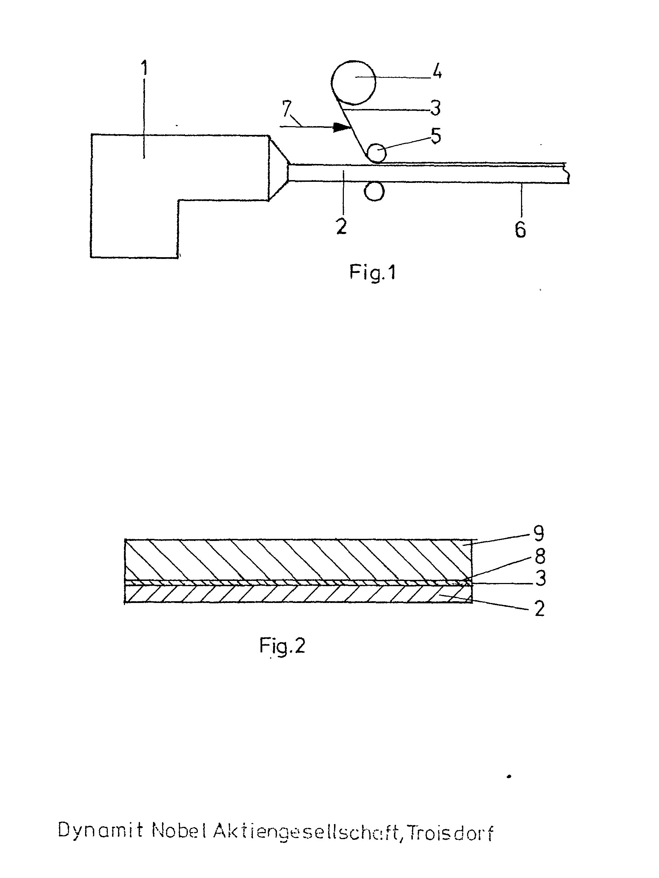

In der Fig. 2 ist der weitere Verbund des Verbundflächengebildes 6 mit einem glasfaserarmierten ungesättigten Polyesterharzkörper 9 dargestellt. Hierbei wird auf die Oberfläche aus Polyesterfaservlies 3 des Verbundflächengebildes ein ungesättigtes Polyesterharz 8 aufgesprüht und danach der vorgefertige Formkörper 9 aufgelegt und bei einem mehr oder weniger starken Druck durch Aushärten ein haftfester Verbund aller Schichten hergestellt.

An den nachfolgenden Beispielen wird die Erfindung an je einem Verbund eines thermoplastischen Flächengebildes aus Polyvinylidenfluorid, Polypropylen bzw. Niederdruckpolyäthylen mit einem Polyesterfaservlies von 150 g/m$^2$ Flächengewicht unbesintert bzw. besintert dargestellt. Das Flächengebilde und das Polyestervlies sind hierbei jeweils kontinuierlich mittels Walzen miteinander verbunden. Das Aufsintern des Polyvinylidenfluorids-, Polypropylen- oder Niederdruckpolyäthylenpulvers erfolgte jeweils auf die mit dem Flächengebilde zu kaschierende Seite des Polyesterfaservlieses.

Gemessen wurden hierbei die Stirnabzugsfestigkeit nach DIN 53 397, die Druckscherfestigkeit und die Schälfestigkeit gemäß British Standards. Zum Messen der genannten Festigkeiten wurde die freie Oberfläche des Polyesterfaservlieses jeweils mit einem ungesättigten Polyesterharz beharzt, wobei je nach den gewählten Temperaturen entsprechend unterschiedliche ungesättigte Polyesterharze eingesetzt wurden. Aus den Versuchen geht eindeutig hervor, daß die Verbunde unter Einsatz der besinterten Polyesterfaservliese in jedem Fall höhere Festigkeitswerte ergeben als Verbunde mit unbesinterten Polyesterfaservliesen.

Beispiel 1

Herstellung eines Verbundes auf Basis Polyvinylidenfluorid mit Polyesterfaservlies. Als Polyvinylidenfluorid für das Flächengebilde und das Sinterpulver wurde Dyflor 2000 L der Dynamit Nobel AG mit einem Schmelzindex MFI 265/12,5 = 150 g/10 min. (DIN 53 735) eingesetzt. Das Polyesterfaservlies wurde mit etwa 40 g/m$^2$ besintert bei einer Temperatur zwischen 180 und 200 °C.

Prüfergebnisse siehe Tabelle I.

Beispiel 2

Verbund eines Flächengebildes aus Polypropylen mit einem Polyesterfaservlies mit einem Flächengewicht von 150 g/m$^2$, als Polypropylen für das Flächengebilde wurde Hostalen$^{(R)}$ PPH 2250 und für das Sinterpulver Hostalen PPU mit einem MFI von 230/5 = 40 bis 80 g/10 min. eingesetzt, das Polyesterfaservlies wurde                    mit ca. 50 g/m$^2$ besintert.

Prüfergebnisse siehe Tabelle II.

- 11 -

## Tabelle I

| Polyesterfaser-vlies/PVDF | Stirnabzugsfestigkeit | | | | Druckscherfestigkeit $(N/mm^2)$ | Schälfestigkeit gem.British Standards $(N/mm)$ |
|---|---|---|---|---|---|---|
| | 23 °C | 80 °C | 100 °C | 120 °C | 23 °C | 23 °C |
| unbesintert | 7,0 | 3,0 | 2,0 | 1,9 | 9,0 | 12,0 |
| besintert | 8,5 | 3,4 | 2,7 | 2,1 | 14,2 | 32,0 |
| Beharzung | Leguval W 16 | Leguval W 45 | Leguval W 45 | Leguval W 45 | Leguval W 16 | Leguval W 16 |

## Tabelle II

| Polyesterfaser-vlies/PP | Stirnabzugsfestigkeit ($N/mm^2$) | | | | Druckscherfestig-keit ($N/mm^2$) | Schälfestigkeit gem. British Standards ($N/mm$) |
|---|---|---|---|---|---|---|
| | 23 °C | 60 °C | 80 °C | 100 °C | 23 °C | 23 °C |
| unbesintert | 3,4 | 3,6 | – | 2,8 | 8,0 | 18,5 |
| besintert | 7,5 | 5,3 | 4,9 | 4,3 | 13,0 | 29,5 |
| Beharzung | Leguval W 16 | Leguval W 45 | Leguval W 45 | Leguval W 45 | Leguval W 16 | Leguval W 16 |

0019754

Beispiel 3

Verbund eines Flächengebildes aus Niederdruckpolyäthylen mit einem Polyesterfaservlies von 150 g/m$^2$ Flächengewicht, als Kunststoff für das Flächengebilde wurde Niederdruckpolyäthylen Hostalen $^{(R)}$ GM 5050 von Fa. HOECHST und als Sinterpulver ein Niederdruckpolyäthylen mit einem MPI 190/2,16 = 9 g/10 min. (DIN 53 735) eingesetzt. Das Polyesterfaservlies wurde mit ca. 30 g/m$^2$ Pulver besintert.

## Tabelle III

| Polyesterfaser-vlies/HD-PE | Stirnabzugsfestigkeit (N/mm$^2$) | |
|---|---|---|
| | 23 °C | 60 °C |
| unbesintert | 2,3 | 1,5 |
| besintert | 4,0 | 2,5 |
| Beharzung | Leguval W 45 | Leguval W 45 |

Patentansprüche:

1. Verfahren zum haftfesten Verbinden eines Flächengebildes aus einem thermoplastischen Kunststoff mit einem verformbaren Polyesterfaservlies, bei dem das Polyesterfaservlies auf mindestens einer Seite des sich im plastischen bzw. annähernd plastischen Zustand befindlichen Flächengebildes unter Anwendung von Druck aufgebracht und durch anschließendes Abkühlen verankert wird, d a d u r c h   g e k e n n z e i c h n e t , daß auf der einen Seite des Polyesterfaservlieses eine Kunststoffpulverschicht von 20 bis 100 $g/m^2$ aus dem gleichen Kunststoff, aus dem das Flächengebilde besteht, gleichmäßig aufgetragen und bei einer Temperatur zwischen 100 bis 250 $^oC$ gesintert und abgekühlt wird, dann die besinterte Seite des Polyesterfaservlieses kontinuierlich mit dem Flächengebilde durch Einwalzen verbunden wird.

2. Verfahren nach Anspruch 1, dadurch gekennzeichnet, daß für den Verbund mit einem Flächengebilde aus Polyvinylidenfluorid eine Pulverschicht aus Polyvinylidenfluorid von vorzugsweise 40 bis 70 $g/m^2$ bei einer Temperatur von etwa 175 bis 200 $^oC$ auf das Polyesterfaservlies gesintert wird.

3. Verfahren nach Anspruch 1, dadurch gekennzeichnet, daß für den Verbund mit einem Flächengebilde aus Polypropylen eine Pulverschicht aus Polypropylen von vorzugsweise 20 bis 50 $g/m^2$ bei einer Temperatur von etwa 130 bis 150 $^oC$ auf das Polyesterfaservlies gesintert wird.

4. Verfahren nach Anspruch 1, dadurch gekennzeichnet, daß für den Verbund mit einem Flächengebilde aus Polyäthylen eine Pulverschicht aus Polyäthylen

0019754

von 20 bis 50 g/m$^2$ bei einer Temperatur von etwa 100 bis 130 °C auf das Polyesterfaservlies gesintert wird."

5. Verfahren nach einem der Ansprüche 1 bis 4, dadurch gekennzeichnet, daß ein thermoplastisches Polyesterfaservlies mit einem Flächengewicht von 100 bis 300 g/m$^2$ verwendet wird.

6. Verfahren nach einem der Ansprüche 1 bis 5, dadurch gekennzeichnet, daß Kunststoffpulver für die Besinterung mit einer Korngröße von 150 bis 400 $\mu$m eingesetzt wird.

7. Verfahren nach einem der Ansprüche 1 bis 5, dadurch gekennzeichnet, daß auf die freie Oberfläche des mit dem Flächengebilde verbundenen Polyesterfaservlieses ein Haftvermittler aus einem aushärtbaren ungesättigten Polyesterharz aufgebracht und mit einem vorgefertigten und ausgehärteten glasfaserarmierten ungesättigten Polyesterformkörper unter Anwendung von Druck bei Raumtemperatur durch Aushärten des Haftvermittlers haftfest verbunden wird.

Troisdorf, den 22. Mai 1979
OZ 79029 MG/Hs.

0019754

Fig.1

Fig.2

Dynamit Nobel Aktiengesellschaft, Troisdorf

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | AT - B - 325 862 (KEPEC) <br> + Gesamt + <br> -- | 1,4 |
| | DE - B - 1 138 538 (DUNLOP) <br> + Gesamt + <br> -- | 1,4 |
| | DE - B2 - 2 436 186 (KANSAI) <br> + Gesamt + <br> -- | 1,6 |
| | GB - A - 1 460 820 (PENNWALT) <br> + Gesamt + <br> ---- | 1,2 |

**KLASSIFIKATION DER ANMELDUNG (Int.Cl. 3)**

C 08 J 5/06
B 32 B 27/12

**RECHERCHIERTE SACHGEBIETE (Int. Cl. 3)**

C 08 J
B 32 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 14-08-1980 | WEIGERSTORFER |

EPA form 1503.1  06.78